(19)

**Europäisches Patentamt**
**European Patent Office**
**Office européen des brevets**

(11)  **EP 2 256 686 A1**

(12)  **EUROPEAN PATENT APPLICATION**
published in accordance with Art. 153(4) EPC

(43) Date of publication:
**01.12.2010 Bulletin 2010/48**

(51) Int Cl.:
*G06T 1/00* (2006.01)     *B60R 1/00* (2006.01)
*G06T 3/00* (2006.01)     *H04N 7/18* (2006.01)

(21) Application number: **09721218.7**

(22) Date of filing: **03.02.2009**

(86) International application number:
**PCT/JP2009/051748**

(87) International publication number:
**WO 2009/116328 (24.09.2009 Gazette 2009/39)**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **19.03.2008 JP 2008071944**

(71) Applicant: **SANYO Electric Co., Ltd.**
**Moriguchi-Shi**
**Osaka 570-8677 (JP)**

(72) Inventor: **HONGO, Hitoshi**
**Moriguchi-Shi**
**Osaka 570-8677 (JP)**

(74) Representative: **Glawe, Delfs, Moll**
**Patent- und Rechtsanwälte**
**Postfach 26 01 62**
**80058 München (DE)**

(54) **IMAGE PROCESSING DEVICE AND METHOD, DRIVING SUPPORT SYSTEM, AND VEHICLE**

(57) While extracting four feature points from a camera image obtained from a camera installed in a vehicle, an image processing device sets the positions of four reference points on an offset correction image to be generated from the camera image and performs a coordinate conversion based on a homography matrix so that the coordinate values of the four feature points are converted to the coordinate values of the four reference points. The image processing device sets each of the coordinate values so that an image center line and a vehicle center line are matched with each other on the offset correction image. The image processing device determines whether or not an image lacking area in which image data based on the image data of the camera image is not present is included within the entire area of the generated offset correction image. If the image lacking area is included, the two reference points or the four reference points are symmetrically moved in the left and right directions and the homography matrix is recalculated according to the positions of the reference points after the movement.

FIG.6

## Description

### Technical Field

The present invention relates to an image processing device and an image processing method for applying image processing on an input image from a camera. The invention also relates to a driving support system and a vehicle employing those.

### Background Art

A space behind a vehicle tends to be a blind spot to the driver of the vehicle. There has thus been proposed a technique in which a rear camera for monitoring a space behind a vehicle is installed in a rear part of the vehicle, and a camera image obtained from the rear camera is displayed on a display device disposed near the driver's seat.

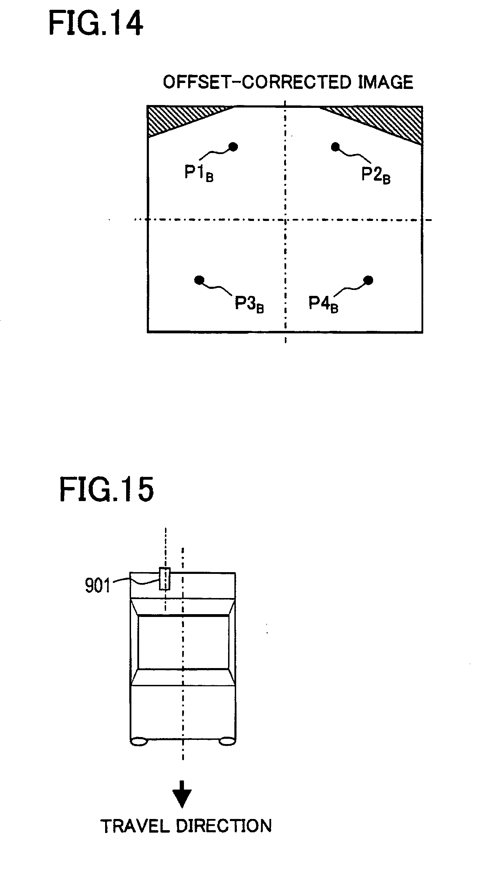

Typically, due to structural or design restrictions of a vehicle, a rear camera is often installed at a position (offset position) displaced from the middle of a rear part of the vehicle as shown in Fig. 15. In Fig. 15, reference symbol 901 indicates a rear camera. Such a displacement causes, on a camera image obtained from the rear camera, the center of the rear part of the vehicle body not to be positioned on the center line of the image. Even when an adjustment is made so that, on the image, the center of the rear part of the vehicle body is aligned with the center line of the image, since the optical axis of the camera is displaced from the vehicle body center line, the vehicle's movement in a video image on a display screen does not match the vehicle's actual movement in the real space, making the driver viewing the video image while driving feel strange.

There has thus been proposed a method in which, in a case where a rear camera is installed at a position displaced from the middle of a rear part of a vehicle, a predetermined area in a camera image is expanded/contracted at a predetermined expansion/contraction ratio based on the amount of offset on every raster line of the camera image (see Patent Document 1 below). In this method, a camera image is divided into a partial image on the left side and a partial image on the right side, and these partial images are subjected to correction by expansion/contraction independently of each other such that the vehicle body center line in the travel direction of the vehicle is positioned on the center line of the image and such that both ends of the vehicle in the travel direction of the vehicle correspond to both ends of the image.

According to this method, however, parameter adjustment for correction is so complicated that, when the installation position of the camera is changed, an adjustment with respect to such a change can hardly be made. Furthermore, since a camera image is divided into a partial image on the left side and a partial image on the right side, and these partial images are subjected to correction by expansion/contraction independently of each other, the partial images on the left and right sides might not appear on a uniform scale.

In the above description, the focus is on a case where a rear camera is disposed at a position displaced from the middle of a rear part of a vehicle. There also may be a case, however, where the optical axis direction of a rear camera is inclined with respect to the travel direction of a vehicle. This case also may present problems similar to the ones described above.

Meanwhile, there is generally known a technique in which a homography matrix is set based on correlation between corresponding ones among coordinates of four characteristic points on an image before being subjected to transformation and coordinates of four reference points on an image that has undergone transformation, and coordinate transformation is performed based on the homography matrix. Surely, coordinates set appropriately through the use of this coordinate transformation allow an offset-corrected image to be generated on which the position of the center of a rear part of a vehicle body coincides with the position of the center line of the image. The use of an improper homography matrix, however, leads to the occurrence of image loss in an offset-corrected image.

Image loss refers to a state where, within the entire region of an offset-corrected image over which the entire image of the offset-corrected image is supposed to appear, an image-missing region is present. An image-missing region refers to a region where no image data based on image data of a camera image is available. Under normal circumstances, image data of all pixels in an offset-corrected image should be generated from image data of a camera image based on the result of shooting by a camera. With an improper homography matrix used as image transformation parameters, however, part of pixels in an offset-corrected image have no corresponding pixels in a camera image, resulting in the occurrence of image loss.

Patent Document 1: JP-A-2005-129988

## Disclosure of the Invention

### Problems to be Solved by the Invention

With the foregoing in mind, it is an object of the present invention to provide an image processing device and an image correction method that are adaptable to various installation positions or installation angles of a camera and can suppress the occurrence of image loss. It is another object of the present invention to provide a driving support system and a vehicle employing those.

### Means for Solving the Problem

An image processing device according to the present invention includes: an image acquisition portion which acquires an input image based on the result of shooting by a camera shooting surroundings of a vehicle; an image transformation portion which generates a transformed image from the input image by coordinate transformation such that the position of a characteristic point on the input image is transformed into the position of a reference point on the transformed image; a parameter storage portion which stores an image transformation parameter that is based on the position of the characteristic point and the position of the reference point and used for transforming the input image into the transformed image; a loss detection portion which checks, by use of the image transformation parameter stored in the parameter storage portion, whether or not, within the entire region of the transformed image obtained from the input image, an image-missing region is present where no image data based on image data of the input image is available; and a parameter adjustment portion which, if the image-missing region is judged to be present within the entire region of the transformed image, adjusts the image transformation parameter via changing the position of the reference point so as to suppress the presence of the image-missing region.

The above-described image processing device generates a transformed image by coordinate transformation based on the position of the characteristic point on an input image and the position of the reference point on the transformed image. Furthermore, since an input image is an image based on the result of shooting by a camera, the installation state of the camera in terms of the installation position and the installation angle is reflected in the position of the characteristic point on the input image. Thus, transformed images corresponding to various installation positions or installation angles of the camera can be generated, and therefore even when the installation position or the like is changed, an image transformation parameter adapted to the thus changed installation position or the like can be generated easily. Although, depending on image transformation parameters used, an image-missing region may be present within the entire region of a transformed image, the presence of such an image-missing region is suppressed automatically by the parameter adjustment portion.

Specifically, for example, if the image-missing region is judged to be present within the entire region of the transformed image, the parameter adjustment portion adjusts the image transformation parameter by shifting the position of the reference point in a direction in which the position is shifted away from the center position of the transformed image so as to reduce the size of the image-missing region.

Shifting the position of the reference point away from the center position of a transformed image as described above narrows the viewing field of the transformed image, and thus the presence of an image-missing region can be suppressed.

More specifically, for example, the characteristic point includes a plurality of characteristic points including first and second characteristic points, and the reference point includes a plurality of reference points including first and second reference points. The first and second characteristic points correspond to the first and second reference points, respectively. If it is judged that the image-missing region is present in a region, which is closer to the first reference point than to the second reference point, within the entire region of the transformed image, the parameter adjustment portion shifts the position of the first reference point in a direction in which the position of the first reference point is shifted away from the center position so as to reduce the size of the image-missing region, while if it is judged that the image-missing region is present in a region, which is closer to the second reference point than to the first reference point, within the entire region of the transformed image, the parameter adjustment portion shifts the position of the second reference point within the transformed image in a direction in which the position of the second reference point is shifted away from the center position so as to reduce the size of the image-missing region.

Even more specifically, for example, supposing that the transformed image is divided into first and second partial images by a center line bisecting the transformed image in a horizontal or vertical direction, the first and second reference points are positioned within the first and second partial images, respectively. When shifting the position of one of the first and second reference points, the parameter adjustment portion shifts the position of the other as well at the same time so that the positions of the first and second reference points are kept in axisymmetric relationship with respect to the center line as a symmetry axis.

For example, the position of the characteristic point, the position of the reference point before being shifted, and a shifted position of the reference point are determined so that, on the transformed image, the vehicle body center line of the vehicle in the travel direction of the vehicle coincides with the center line.

According to this configuration, on a transformed image, the center line of the image coincides with the vehicle body center line, and the image appears on a uniform scale across the left and right sides of the image.

Furthermore, for example, the image transformation parameter defines coordinates before coordinate transformation corresponding to the coordinates of individual pixels within the transformed image; when the coordinates before coordinate transformation are all coordinates within the input image, the loss detection portion judges that no image-missing region is present within the entire region of the transformed image and, when the coordinates before coordinate transformation include coordinates outside the input image, the loss detection portion judges that the image-missing region is present within the entire region of the transformed image.

A driving support system according to the present invention includes the camera and the image processing device. In the driving support system, an image based on the transformed image obtained at the image transformation portion of the image processing device is outputted to a display device.

A vehicle according to the present invention includes the camera and the image processing device.

An image processing method according to the present invention includes: an image acquiring step of acquiring an input image based on the result of shooting by a camera shooting surroundings of a vehicle; an image transforming step of generating a transformed image from the input image by coordinate transformation such that the position of a characteristic point on the input image is transformed into the position of a reference point on the transformed image; a parameter storing step of storing an image transformation parameter that is based on the position of the characteristic point and the position of the reference point and used for transforming the input image into the transformed image; a loss detecting step of checking, by use of the image transformation parameter stored, whether or not, within the entire region of the transformed image obtained from the input image, an image-missing region is present where no image data based on image data of the input image is available; and a parameter adjusting step of adjusting, if the image-missing region is judged to be present within the entire region of the transformed image, the image transformation parameter via changing the position of the reference point so as to suppress the presence of the image-missing region.

## Advantages of the Invention

The present invention can provide an image processing device and an image correction method that are adaptable to various installation positions or installation angles of a camera and can suppress the occurrence of image loss. The invention also can provide a driving support system and a vehicle employing those.

The significance and benefits of the invention will be clear from the following description of its embodiment. It should however be understood that the embodiment is merely an example of how the invention is implemented, and that the meanings of the terms used to describe the invention and its features are not limited to the specific ones in which they are used in the following description of the embodiment.

## Brief Description of Drawings

[Fig. 1](a) is a plan view of a vehicle as seen from above, and (b) is a plan view of the vehicle as seen sideways, according to an embodiment of the present invention.

[Fig. 2] is a schematic overall block diagram of a driving support system according to the embodiment of the present invention.

[Fig. 3](a) is a diagram showing a state where a camera shown in Fig. 2 is installed at a position displaced from the middle of a rear part of the vehicle, and (b) is a diagram showing a state where the camera shown in Fig. 2 is installed in an inclined manner.

[Fig. 4] is a flow chart showing the operation of calculating an initial value of a homography matrix according to the embodiment of the present invention.

[Fig. 5] is a diagram showing a shooting environment of the camera in calculating an initial value of a homography matrix.

[Fig. 6] is a diagram showing a camera image and an offset-corrected image according to the embodiment of the present invention.

[Fig. 7] is a diagram for explaining the structure of a rectangular image as a camera image or an offset-corrected image according to the embodiment of the present invention.

[Fig. 8] is a diagram showing that there is image loss in an offset-corrected image according to the embodiment of the present invention.

[Fig. 9] is a detailed block diagram of the driving support system shown in Fig. 2, which includes a functional block diagram of an image processing device.

[Fig. 10] is a flow chart showing the flow of the operation of the driving support system shown in Fig. 2.

[Fig. 11] is a diagram showing the contour of an offset-corrected image on an XY coordinate plane, which is defined in the image processing device shown in Fig. 9.

[Fig. 12](a) is a diagram showing the relationship between a camera image and an offset-corrected image in a case where there is no image loss, and (b) is a diagram showing the relationship between the camera image and the offset-corrected image in a case where there is image loss.

[Fig. 13](a) is a diagram showing an offset-corrected image including two image-missing regions, (b) is an enlarged view of a first image region of that offset-corrected image, and (c) is an enlarged view of a fourth image region of that offset-corrected image.

[Fig. 14] is a diagram showing another example of an offset-corrected image including two image-missing regions.

[Fig. 15] is a diagram showing a state where a rear camera is installed at a position displaced from the middle of a rear part of a vehicle according to the conventional technique.

**List of Reference Symbols**

1    Camera
2    Image processing device
3    Display device
4    Operation portion
11    Image input portion
12    Lens distortion correction portion
13    Image transformation portion
14    Loss detection portion
15    Parameter adjustment portion
16    Parameter storage portion
17    Display image generation portion

**Best Mode for Carrying Out the Invention**

The following specifically describes an embodiment of the present invention with reference to the appended drawings. Among different drawings referred to in the course, the same parts are identified by the same reference symbols, and in principle, no overlapping description of the same parts will be repeated.

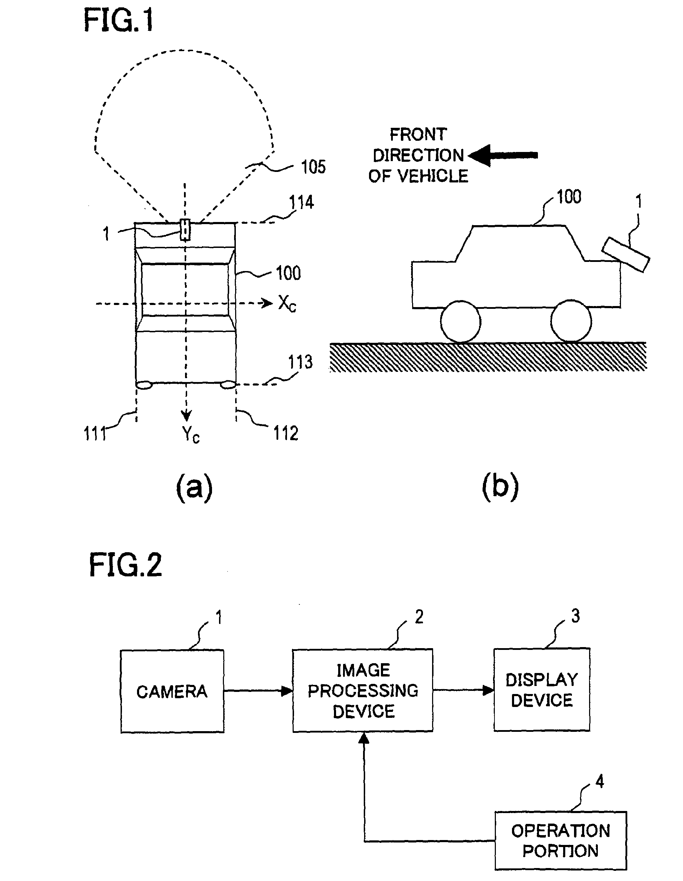

Fig. 1(a) is a plan view, as seen from above, of a vehicle 100 that is an automobile. Fig. 1(b) is a plan view, as seen sideways, of the vehicle 100. It is assumed that the vehicle 100 is located on the surface of a road. A camera 1 for providing support in checking safety behind the vehicle 100 is installed in a rear part of the vehicle 100. The camera 1 is installed on the vehicle 100 so as to have a viewing field in the rear direction of the vehicle 100. A fan-shaped range shown with a broken line, which is indicated by reference symbol 105, represents a shooting range (viewing field) of the camera 1. The camera 1 is so installed as to point rearward-downward thereby to have a viewing field covering a surface of the road in the rear direction of and in the vicinity of the vehicle 100. Although a common passenger car is shown as an example of the vehicle 100, the vehicle 100 may be any type of vehicle (such as a truck) other than a common passenger car. It is assumed that the road surface lies on the horizontal plane.

Herein, in the real space (space existing in reality), imaginary $X_c$- and $Y_c$-axes are defined relative to the vehicle 100. The $X_c$- and $Y_c$-axes are axes on the road surface and are orthogonal to each other. In a two-dimensional coordinate system composed of the $X_c$- and $Y_c$-axes, the $Y_c$-axis is parallel to the travel direction of the vehicle 100, and the vehicle body center line of the vehicle 100 lies on the $Y_c$-axis. The travel direction of the vehicle 100 is intended herein to mean a direction in which the vehicle 100 travels when moving straight. Furthermore, the vehicle body center line is intended to mean a center line of the vehicle body parallel to the travel direction of the vehicle 100. More specifically, the vehicle body center line is a line passing through a center between an imaginary line 111 that extends along the right end of the vehicle 100 and is parallel to the $Y_c$-axis and an imaginary line 112 that extends along the left end of the vehicle 100 and is parallel to the $Y_c$-axis. Furthermore, a line passing through a center between an imaginary line 113 that extends along the front end of the vehicle 100 and is parallel to the $X_c$-axis and an imaginary line 114 that extends along the rear end of the vehicle 100 and is parallel to the $X_c$-axis lies on the $X_c$-axis. It is assumed that the imaginary lines 111 to 114 are imaginary lines on the road surface. The right end of the vehicle 100 is synonymous with the right end of the vehicle body of the vehicle 100. The same applies also to the left end and the like of the vehicle 100.

Fig. 2 shows a schematic overall block diagram of a driving support system according to the embodiment of the present invention. The driving support system includes a camera 1, an image processing device 2, a display device 3, and an operation portion 4. The camera 1 shoots a subject (including the road surface) located on the periphery of the vehicle 100 and outputs a signal representing an image obtained as a result of the shooting to the image processing device 2. The image processing device 2 generates a display image based on the image obtained from the camera 1. The image processing device 2 outputs a video signal representing the generated display image to the display device 3, and the display device 3 displays the display image in the form of a video image in accordance with the video signal fed thereto. The operation portion 4 accepts an operation by the user, and the contents of the operation by the user are transmitted to the image processing device 2.

An image obtained as a result of shooting by the camera 1 is called a camera image. A camera image represented by an output signal as it is of the camera 1 is often under the influence of lens distortion. The image processing device 2 therefore performs lens distortion correction with respect to a camera image represented by an output signal as it is of the camera 1 and generates a display image based on the camera image that has undergone the lens distortion correction. In the following description, unless otherwise specified, a camera image refers to one that has undergone lens distortion correction. Depending on the characteristics of the camera 1, however, the lens distortion correction processing may be omitted.

Used as the camera 1 is a camera employing a solid-state image sensor such as a CCD (charge-coupled device) or CMOS (complementary metal oxide semiconductor) image sensor. The image processing device 2 is, for example, built as an integrated circuit. The display device 3 is, for example, built around a liquid crystal display panel. A display device included in a car navigation system or the like may be shared as the display device 3 in the driving support system. The image processing device 2 may be integrated into, as part of, a car navigation system. The image processing device 2 and the display device 3 are installed, for example, near the driver's seat in the vehicle 100.

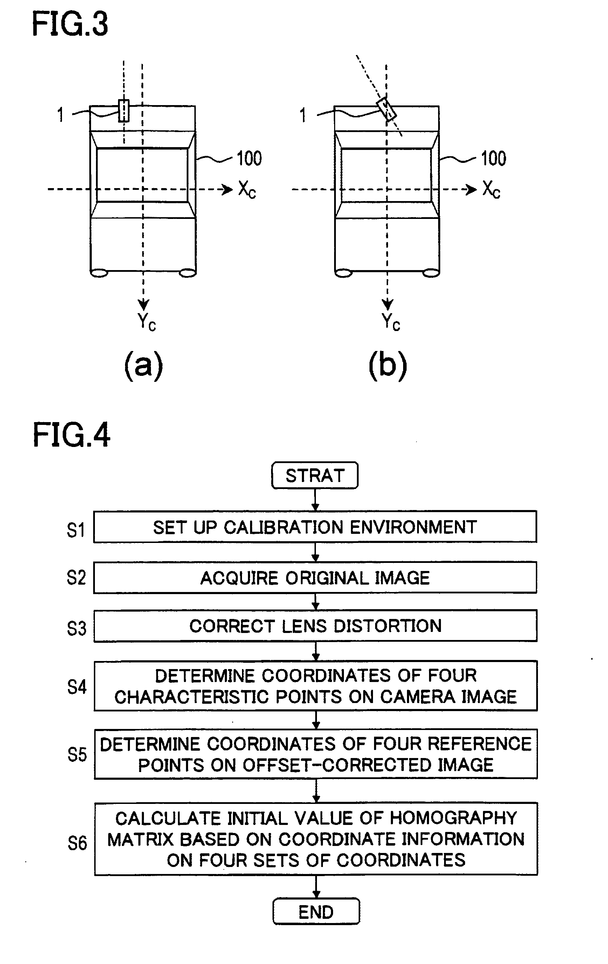

Ideally, the camera 1 is disposed at the middle of the rear part of the vehicle so as to point precisely to the rear direction of the vehicle. That is, ideally, the camera 1 is installed on the vehicle 100 so that the optical axis of the camera 1 lies on a plumb plane including the $Y_c$-axis. Due to structural or design restrictions of the vehicle 100 or possible errors involved in installing the camera 1, however, the camera 1 is often installed at a position displaced from the middle of the rear part of the vehicle as shown in Fig. 3(a) or installed with the optical axis thereof not being parallel to the plumb plane including the $Y_c$-axis as shown in Fig. 3(b). In such a case, the center line of a camera image is displaced from the vehicle body center line as appearing on the camera image, or a camera image is inclined with respect to the travel direction of the vehicle 100. The driving support system according to this embodiment has a function of generating and displaying an image that has undergone compensation of such a displacement or an inclination of the image.

An image that has undergone compensation of a displacement or an inclination of the image is called an offset-corrected image. An offset-corrected image is obtained by subjecting a camera image to coordinate transformation. It also is possible to consider that an offset-corrected image is generated by transforming a camera image into an image as if viewed from an imaginary viewpoint different from the viewpoint of the camera 1. This type of coordinate transformation (or image transformation by the said coordinate transformation) is also called viewpoint transformation.

Coordinate transformation for obtaining an offset-corrected image from a camera image can be performed based on a homography matrix (projection transformation matrix). The image processing device 2 determines a homography matrix based on the result of shooting by the camera 1, and the homography matrix that has once been determined by calculation may be adjusted in a later stage. The description is first directed to a method for calculating an initial value of a homography matrix with reference to Fig. 4. Fig. 4 is a flow chart showing the operation of calculating an initial value of a homography matrix. Processing at steps S4 through S6 shown in Fig. 4 is carried out by, for example, a parameter introduction portion (not shown) provided in the image processing device 2.

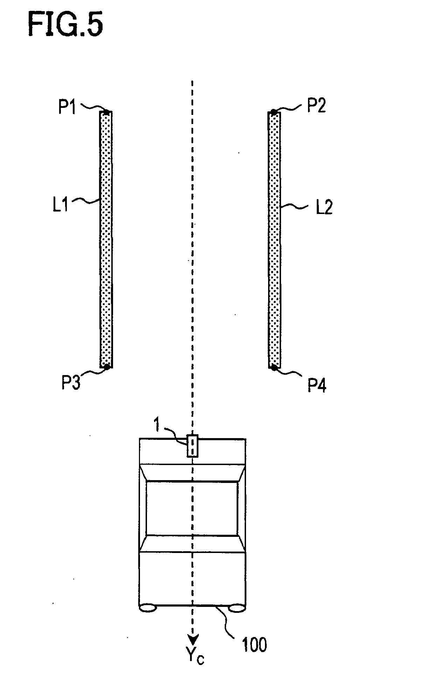

First, at step S1, a calibration environment is set up. Assume that the calibration environment shown in Fig. 5 is set up as a representative example. It is to be noted, however, that the following describes an ideal calibration environment and a calibration environment in practice may include errors.

The camera 1 is installed on the vehicle 100, and the vehicle 100 is located on the road surface so that white lines L1 and L2 drawn on the road surface fall within the viewing field of the camera 1. The white lines L1 and L2 are, for example, markers for partitioning one parking stall in a parking lot from another. It is assumed that, on the road surface, the white lines L1 and L2 are line segments that are parallel to each other and equal in length. It also is assumed that the white lines L1 and L2 are in axisymmetric relationship with respect to the $Y_c$-axis as a symmetry axis. Hence, the $Y_c$-axis is parallel to the white lines L1 and L2, and a distance between the $Y_c$-axis and the white line L1 is equal to a distance between the $Y_c$-axis and the white line L2. Although Fig. 5 shows the camera 1 as being disposed at the middle of the rear part of the vehicle so as to point precisely to the rear direction of the vehicle, the camera 1 in fact may be displaced as described above.

Of both end points of the white line L1, the one farther from the camera 1 and the vehicle 100 is indicated as P1 and the other nearer thereto is indicated as P3, and of both end points of the white line L2, the one farther from the camera 1 and the vehicle 100 is indicated as P2 and the other nearer thereto is indicated as P4. For the ease of explanation, the thickness (length in the $X_c$-axis direction) of each of the white lines is ignored. In a case where the thickness of the white line L1 is not to be ignored, for example, assuming a center line of the white line L1 parallel to the $Y_c$-axis, both end points of the white line L1 on that center line are defined as end points P1 and P3 (the same applies also to the white line L2).

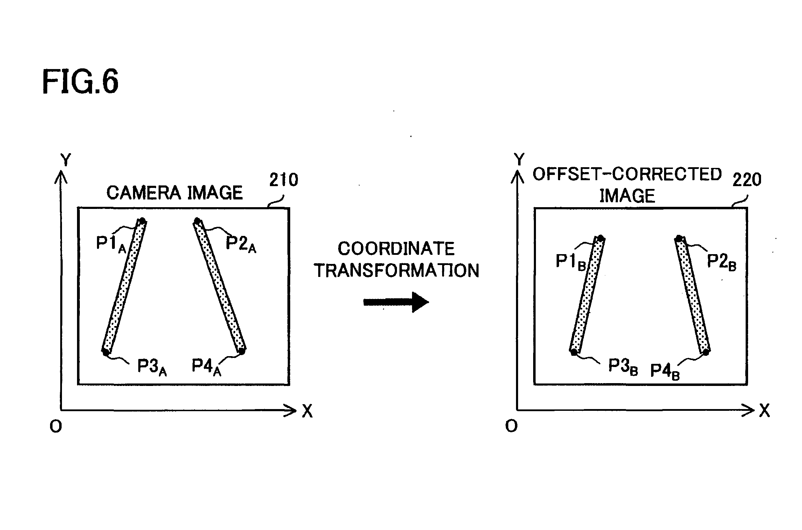

Under the above-described calibration environment, at step S2, the camera 1 is made to shoot to acquire an original image, and at step S3, the original image is subjected to lens distortion correction. An original image refers to a camera image before being subjected to lens distortion correction. As described earlier, an image obtained by subjecting an original image to lens distortion correction is simply called a camera image. It is assumed that a camera image 210 shown Fig. 6 is obtained at step S3. Points $P1_A$ to $P4_A$ in the camera image 210 represent the end points P1 to P4 as appearing on the camera image 210, respectively, and are called characteristic points. Furthermore, reference symbol 220 indicates an offset-corrected image obtained by subjecting the camera image 210 to coordinate transformation in accordance with an initial value of a homography matrix that is to be determined through the processing shown in Fig. 4.

Subsequently, at step S4, the image processing device 2 extracts the characteristic points $P1_A$ to $P4_A$ from the camera image 210 based on image data of the camera image 210 and detects the positions of the characteristic points $P1_A$ to $P4_A$.

Known methods can be used to extract end points of white lines in an image. For example, the methods described respectively in JP-A-S63-142478, JP-A-H 7-78234, or International Publication No. WO 00/7373 can be used. That is, for example, edge extraction processing is performed with respect to a camera image, following which with respect to the result of the edge extraction processing, straight line extraction processing using a Hough transform or the like further is performed, and end points of resulting line segments are extracted as end points of white lines. The positions of the characteristic points $P1_A$ to $P4_A$ may be determined also through a manual operation by the user. That is, the positions of the characteristic points $P1_A$ to $P4_A$ may be determined based on the contents of an operation performed on the operation portion 4 by the user. Furthermore, it also is possible that, after the characteristic points $P1_A$ to $P4_A$ have once been extracted automatically based on image data of the camera image 210, with the aim of removing errors involved in the extraction, the user performs, as required, a manual operation to provide accurate positions of the characteristic points $P1_A$ to $P4_A$ to the image processing device 2.

The positions of the individual characteristic points are represented by coordinates on the camera image 210. Herein, as a coordinate plane (coordinate system) on which the camera image and the offset-corrected image are defined, a two-dimensional XY coordinate plane (XY coordinate system) having, as its coordinate axes, an X-axis and a Y-axis is assumed. The X-axis and the Y-axis are orthogonal to each other, and coordinates of a point on the camera image are indicated as (x, y), while coordinates of a point on the offset-corrected image are indicated as (x', y'). The symbols x and y represent an X-axis component and a Y-axis component of the position of a point on the camera image, respectively, and the symbols x' and y' represent an X-axis component and a Y-axis component of the position of a point on the offset-corrected image, respectively. It is assumed that the X-axis is parallel to the horizontal direction (and a horizontal line) of the camera image and the offset-corrected image, and the Y-axis is parallel to the vertical direction (and a vertical line) of the camera image and the offset-corrected image. It also is assumed that the X-axis direction corresponds to the left-and-right direction of the images, and the Y-axis direction corresponds to the up-and-down direction of the images. Furthermore, an origin on the XY coordinate plane corresponding to the intersection of the X-axis and the Y-axis is indicated as O.

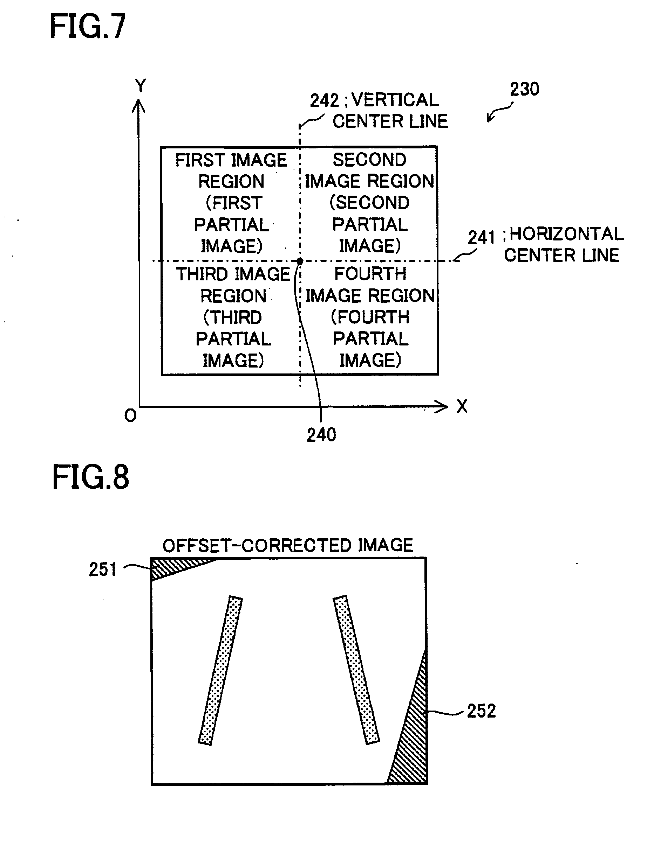

Furthermore, it is assumed that the camera image and the offset-corrected image are images of a rectangular shape. Fig. 7 shows a rectangular image 230 representing the camera image or the offset-corrected image. In Fig. 7, a straight line 241 represents a horizontal center line bisecting the rectangular image 230 in the vertical direction, and a straight line 242 represents a vertical center line bisecting the rectangular image 230 in the horizontal direction. The horizontal center line 241 is parallel to a horizontal line of the rectangular image 230 (parallel to the X-axis), and the vertical center line 242 is parallel to a vertical line of the rectangular image 230 (parallel to the Y-axis). The entire region of the rectangular image 230 is divided into four regions by the horizontal center line 241 and the vertical center line 242. An image region positioned on the upper side with respect to the horizontal center line 241 and on the left side with respect to the vertical center line 242 is called a first image region, and an image region positioned on the upper side with respect to the horizontal center line 241 and on the right side with respect to the vertical center line 242 is called a second image region. Further, an image region positioned on the lower side with respect to the horizontal center line 241 and on the left side with respect to the vertical center line 242 is called a third image region, and an image region positioned on the lower side with respect to the horizontal center line 241 and on the right side with respect to the vertical center line 242 is called a fourth image region. Images in the first, second, third, and fourth image regions are called first, second, third, and fourth partial images, respectively. Furthermore, an intersection 240 of the horizontal center line 241 and the vertical center line 242 corresponds to the center point of the rectangular image 230.

After the positions of the characteristic points $P1_A$ to $P4_A$ are determined at step S4 shown in Fig. 4, at step S5, the image processing device 2 determines the positions of reference points $P1_B$ to $P4_B$ that are to correspond to the characteristic points $P1_A$ to $P4_A$. The reference points $P1_B$ to $P4_B$ represent the end points P1 to P4 as appearing on the offset-corrected image, and the positions of the individual reference points are represented by coordinates on the offset-corrected image. The positions of the reference points $P1_B$ to $P4_B$ are, for example, set in advance. Or alternatively, the user designates the positions of the reference points $P1_B$ to $P4_B$ by performing an operation on the operation portion 4.

It is assumed, however, that the reference points $P1_B$ to $P4_B$ are positioned within the first to fourth image regions of the offset-corrected image, respectively. It also is assumed that the characteristic points $P1_A$ to $P4_A$ are positioned within the first to fourth image regions of the camera image, respectively. Moreover, in the offset-corrected image, the reference points $P1_B$ and $P3_B$ and the reference points $P2_B$ and $P4_B$ are provided symmetrically such that the vertical center line coincides with the vehicle body center line. That is, at step S5, the positions of the reference points $P1_B$ to $P4_B$ are determined so that the position of the reference point $P1_B$ and the position of the reference point $P2_B$ are in axisymmetric relationship with respect to the vertical center line of the offset-corrected image as a symmetry axis and so that the position of the reference point $P3_B$ and the position of the reference point $P4_B$ are in axisymmetric relationship with respect to the vertical center line of the offset-corrected image as a symmetry axis.

After the coordinates (positions) of the four characteristic points and the coordinates (positions) of the four reference points have been determined at steps S4 and S5, respectively, at step S6, the image processing device 2 calculates an initial value of a homography matrix based on those pieces of coordinate information. Where a homography matrix is indicated as H, the relationship between the coordinates $(x, y)$ on the camera image and the coordinates $(x', y')$ on the offset-corrected image is expressed by formula (1) below. The homography matrix H is a three-row, three-column matrix, and its individual elements are indicated as $h_1$ to $h_9$. Moreover, it is assumed that $h_9 = 1$ (the matrix is normalized such that $h_9 = 1$). Based on formula (1), the relationship between the coordinates $(x, y)$ and the coordinates $(x', y')$ can be expressed also by formulae (2a) and (2b) below.

[Formula 1]

$$\begin{pmatrix} x' \\ y' \\ 1 \end{pmatrix} = H \begin{pmatrix} x \\ y \\ 1 \end{pmatrix} = \begin{pmatrix} h_1 & h_2 & h_3 \\ h_4 & h_5 & h_6 \\ h_7 & h_8 & h_9 \end{pmatrix} \begin{pmatrix} x \\ y \\ 1 \end{pmatrix} \tag{1}$$

$$= \begin{pmatrix} h_1 & h_2 & h_3 \\ h_4 & h_5 & h_6 \\ h_7 & h_8 & 1 \end{pmatrix} \begin{pmatrix} x \\ y \\ 1 \end{pmatrix}$$

[Formula 2]

$$x' = \frac{h_1 x + h_2 y + h_3}{h_7 x + h_8 y + 1} \tag{2a}$$

$$y' = \frac{h_4 x + h_5 y + h_6}{h_7 x + h_8 y + 1} \tag{2b}$$

Known techniques can be used to determine a homography matrix based on correlation between corresponding coordinates among four sets of coordinates. For example, the technique described in JP-A-2004-342067 (see, particularly, the technique described in paragraphs [0059] to [0069]) may be used. It is assumed that coordinates of the characteristic points $P1_A$ to $P4_A$ determined at step S4 are $(x_1, y_1)$, $(x_2, y_2)$, $(x_3, y_3)$, and $(x_4, y_4)$, respectively, and coordinates of the reference points $P1_B$ to $P4_B$ determined at step S5 are $(x_1', y_1')$, $(x_2', y_2')$, $(x_3', y_3')$, and $(x_4', y_4')$, respectively. Then, at step S6, the image processing device 2 determines the respective values of the elements $h_1$ to $h_8$ of the homography matrix H such that the coordinates $(x_1, y_1)$, $(x_2, y_2)$, $(x_3, y_3)$, and $(x_4, y_4)$ are transformed into the coordinates $(x_1', y_1')$, $(x_2', y_2')$, $(x_3', y_3')$, and $(x_4', y_4')$, respectively. In practice, the respective values of the elements $h_1$ to $h_8$ are determined such that possible errors involved in this transformation (the evaluation function used in JP-A-2004-342067) are minimized. The homography matrix H having the respective values of the elements $h_1$ to $h_8$ determined herein is used as an initial value of a homography matrix that is to be determined at step S6.

Once the homography matrix has been determined, in accordance with formulae (2a) and (2b) above, an arbitrary point on the camera image can be transformed into a point on the offset-corrected image, and, on an offset-corrected image generated from an arbitrary camera image, the vertical center line is allowed to coincide with the vehicle body center line. In practice, for example, table data according to the homography matrix thus determined is generated and stored in a memory in the image processing device 2 thereby to form a look-up table, and reference is made to the look-up table in generating an offset-corrected image from a camera image. Table data or a homography matrix described herein refers to parameters defining coordinates on a camera image (namely, coordinates before being subjected to coordinate transformation) corresponding to coordinates of pixels on an offset-corrected image. In the following description, these parameters are called image transformation parameters.

The above-described method for calculating an initial value of a homography matrix is only illustrative, and it does not matter how an initial value of a homography matrix is calculated as long as the vertical center line and the vehicle body center line coincide with each other on an offset-corrected image obtained using the initial value of the homography matrix.

Determining image transformation parameters in the above-described manner allows the vertical center line to coincide with the vehicle body center line on an offset-corrected image. The use of particular image transformation parameters, however, might lead to the occurrence of image loss in an offset-corrected image as shown in Fig. 8.

Image loss refers to a state where, within the entire region of an offset-corrected image over which the entire image of the offset-corrected image is supposed to appear, an image-missing region is present. An image-missing region refers to a region where no image data based on image data of a camera image is available. In Fig. 8, hatched regions indicated by reference symbols 251 and 252 represent image-missing regions. Under normal circumstances, image data of all pixels in an offset-corrected image should be generated from image data of a camera image based on the result of shooting by a camera. With improper image transformation parameters, however, part of pixels in an offset-corrected image have no corresponding pixels in a camera image, resulting in the occurrence of image loss.

Even in a case where the camera 1 is not disposed at the middle of the rear part of the vehicle so as to point precisely to the rear direction of the vehicle, when it is sure that the installation position and angle of the camera 1 will be fixed completely at a given position and angle, the shooting range of the camera 1 relative to the vehicle 100 does not vary. In that case, in the stage of designing the driving support system, image transformation parameters can be set optimally in consideration of how the camera 1 is to be installed. However, in a case where, by the user, a camera as the camera 1 is prepared independently of the vehicle 100 and installed on the vehicle 100 so as to be adapted for the shape or the like of the vehicle 100, even if image transformation parameters are determined in the above-described manner, whether or not image loss occurs in an offset-corrected image is unknown until after image transformation actually is performed.

In order to preclude the occurrence of image loss, the driving support system according to this embodiment is provided with a function of automatically adjusting image transformation parameters. With the focus placed on this function, the following describes the configuration and operation of the driving support system.

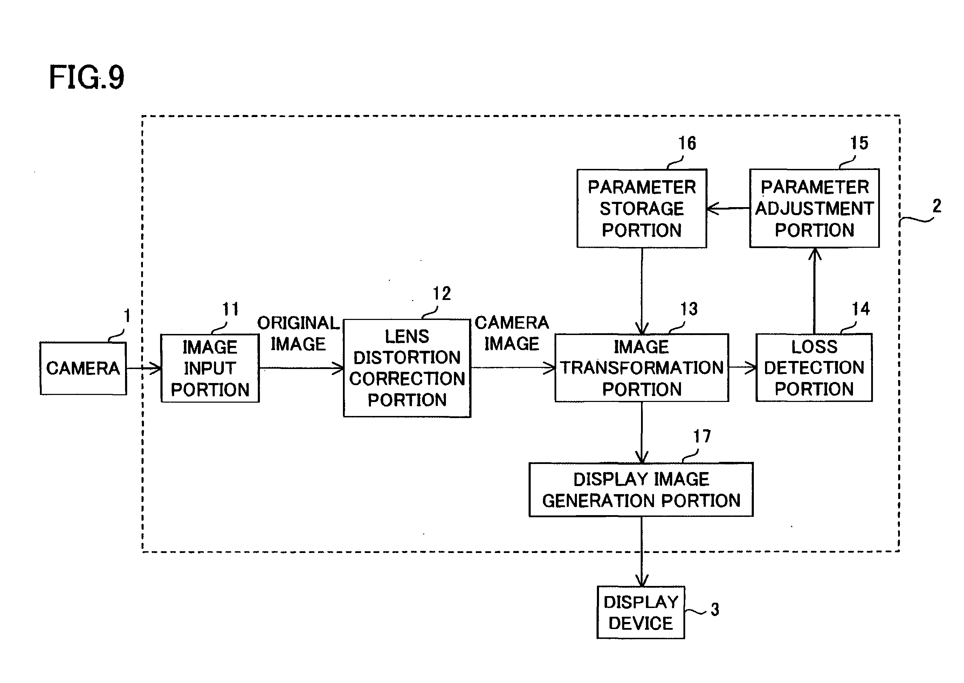

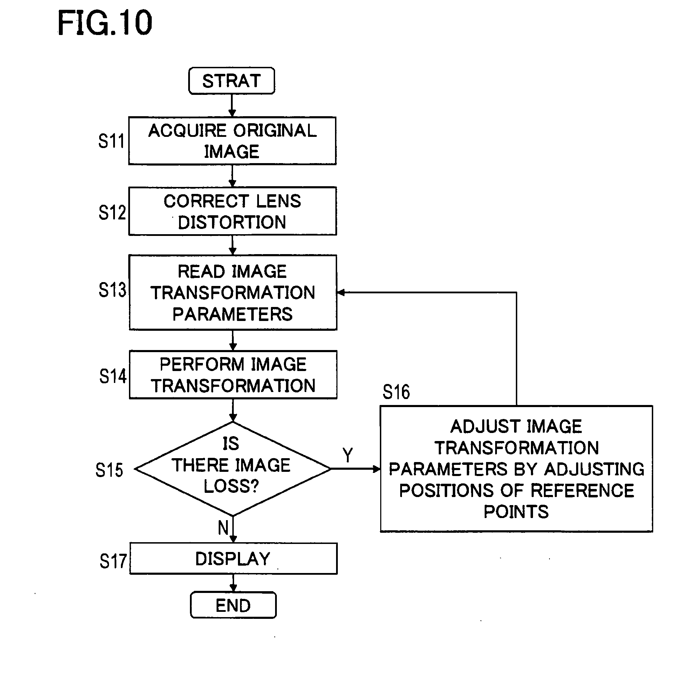

Fig. 9 is a detailed block diagram of the driving support system shown in Fig. 2, which includes a functional block diagram of the image processing device 2. The image processing device 2 includes parts indicated by reference symbols 11 to 17. Fig. 10 is a flow chart showing the flow of the operation of the driving support system including the operation for realizing the above-described automatic adjusting function.

First, at step S11, the image input portion 11 receives an input of an original image from the camera 1. That is, the image input portion 11 acquires an original image by receiving image data of the original image transmitted from the camera 1 and storing the image data in a frame memory (not shown). As described earlier, an original image refers to a camera image before being subjected to lens distortion correction. The camera 1 adopts a wide-angle lens in order to secure a wide viewing angle, so that an original image obtained might be distorted. At step S12, the lens distortion correction portion 12 therefore performs lens distortion correction with respect to the original image acquired by the image input portion 11. As a method of lens distortion correction, any known method can be used, such as the one described in JP-A-H 5-176323. As described earlier, an image obtained by subjecting an original image to lens distortion correction is simply called a camera image.

Subsequent to step S12, at step S13, the image transformation portion 13 reads image transformation parameters stored in the parameter storage portion 16. Initially, the image transformation parameters (namely, image transformation parameters representing an initial value of a homography matrix) determined at step S6 shown in Fig. 4 have been stored in the parameter storage portion 16. As will be described later, however, image transformation parameters stored as described above may be updated. At step S13, the newest image transformation parameters are read. Subsequently, at step S14, in accordance with the image transformation parameters thus read, the image transformation portion 13 subjects a camera image fed from the lens distortion correction portion 12 to coordinate transformation (viewpoint transformation), thereby generating an offset-corrected image.

Subsequent to the processing at step S14, the loss detection portion 14 carries out the processing at step S15. The loss detection portion 14 checks whether or not there is image loss in an offset-corrected image that is to be generated at step S14. When an image-missing region is present within the entire region of the offset-corrected image, the loss detection portion 14 judges that there is image loss, and when no image-missing region is present within the entire region of the offset-corrected image, the loss detection portion 14 judges that there is no image loss.

If it is judged that there is image loss in the offset-corrected image, an advance is made from step S15 to step S16, and if it is judged that there is no image loss on the offset-corrected image, an advance is made to step S17.

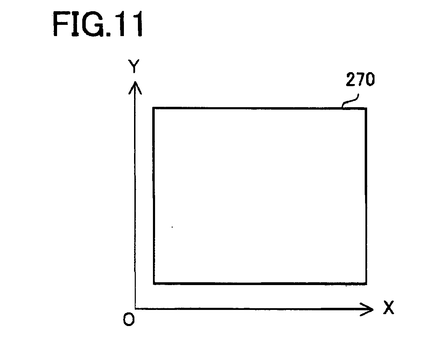

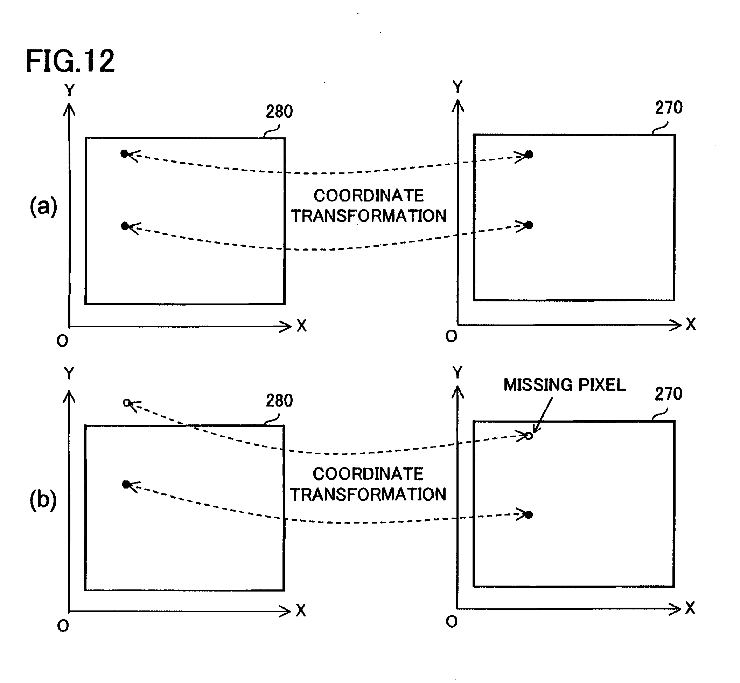

With reference to Fig. 11 and Figs. 12(a) and (b), a supplementary description will be given of the significance of image loss and of a method for checking whether or not there is image loss. Coordinates on the XY coordinate plane at which pixels constituting an offset-corrected image are supposed to be positioned are set in advance, and in accordance with those settings, the contour position of the offset-corrected image on the XY coordinate plane also is set in advance. In Fig. 11 and Figs. 12(a) and (b), a frame indicated by reference symbol 270 represents the contour of the entire region of an offset-corrected image on the XY coordinate plane. From the group of pixels arrayed two-dimensionally inside the frame 270, the offset-corrected image is generated.

In accordance with the image transformation parameters read at step S13, the loss detection portion 14 determines the coordinates $(x, y)$ corresponding to the coordinates $(x', y')$ of the individual pixels inside the frame 270. When all the coordinates $(x, y)$ thus determined are coordinates inside the camera image, that is, when image data of all the pixels constituting the offset-corrected image can be obtained from image data of the camera image, it is judged that there is no image loss. On the other hand, when the coordinates $(x, y)$ thus determined include coordinates outside the camera image, it is judged that there is image loss. Fig. 12(a) shows how coordinate transformation proceeds when there is no image loss, and Fig. 12(b) shows how coordinate transformation proceeds when there is image loss. In Figs. 12(a) and (b), a frame 280 represents the contour of the entire region of the camera image on the XY coordinate plane, and it is only inside the frame 280 that image data of the camera image is available.

If, at step S15, it is judged that there is image loss, at step S16, the parameter adjustment portion 15 adjusts the image transformation parameters based on the result of the judgment.

The description is directed to a method of adjustment performed at step S16. In a case where the first, second, third, and fourth image regions among the first to fourth image regions (see Fig. 7) constituting the entire region of the offset-corrected image include an image-missing region, the parameter adjustment portion 15 shifts the positions of the reference points $P1_B$, $P2_B$, $P3_B$, and $P4_B$ respectively in directions in which the positions are shifted away from the center point of the offset-corrected image so as to reduce the size of the image-missing region (ultimately, so as to completely remove the image-missing region), and recalculates the image transformation parameters in accordance with the thus shifted positions of the reference points. This recalculation achieves an adjustment. That is, image transformation parameters newly obtained by this recalculation are adjusted image transformation parameters. The image transformation parameters stored in the parameter storage portion 16 are updated with the adjusted image transformation parameters. Shifting the positions of the reference points away from the center point of the offset-corrected image narrows the viewing field of the offset-corrected image, thus making an image-missing region unlikely to be present.

In this case, when the position of one of the reference points $P1_B$ and $P2_B$ is shifted, the position of the other also is shifted at the same time so that the positions of the reference point $P1_B$ and the reference point $P2_B$ are kept in axisymmetric relationship with respect to the vertical center line 242 as a symmetry axis. Similarly, when the position of one of the reference points $P3_B$ and $P4_B$ is shifted, the position of the other also is shifted at the same time so that the positions of the reference point $P3_B$ and the reference point $P4_B$ are kept in axisymmetric relationship with respect to the vertical center line 242 as a symmetry axis. Thus, also on an offset-corrected image based on the adjusted image transformation parameters, the vertical center line coincides with the vehicle body center line, and the image appears on a uniform scale across the left and right sides of the image. That is, on the image, an object located in the first partial image and an object located in the second partial image appear as having the same length in the horizontal direction, if these objects have the same size in the real space. The same applies also to the relationship between the third partial image and the fourth partial image.

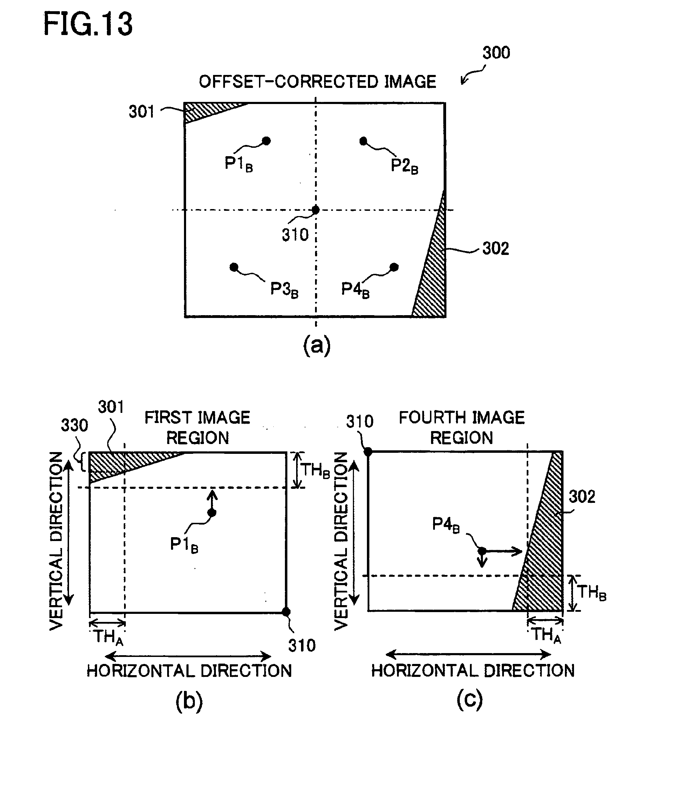

The following describes a specific method for determining shift directions and shift amounts of the reference points. Now, assume a case where, using the image transformation parameters before being adjusted, an offset-corrected image 300 shown in Fig. 13(a) is obtained at step S14. It is assumed that the first image region of the offset-corrected image 300 includes an image-missing region 301 and that the fourth image region of the offset-corrected image 300 includes an image-missing region 302. The image-missing region 302 is partly included in the second image region. Furthermore, the center point of the offset-corrected image 300 is indicated by reference symbol 310. Figs. 13(b) and (c) are enlarged views of the first and fourth image regions of the offset-corrected image 300, respectively.

With respect to each of the first to fourth image regions of the offset-corrected image 300 as a region of interest, the parameter adjustment portion 15 calculates the number of horizontally arrayed pixels on every horizontal line and the number of vertically arrayed pixels on every vertical line, of an image-missing region present in the region of interest. In an image-missing region present in the $i$-th image region, the number of horizontally arrayed pixels on a certain horizontal line refers to the number of pixels that are included in that image-missing region and positioned on the said horizontal line, and the number of vertically arrayed pixels on a certain vertical line refers to the number of pixels that are included in that image-missing region and positioned on the said vertical line (herein, $i$ is 1, 2, 3 or 4). Focusing first on the first image region, the following describes processing based on the results of these calculations.

The parameter adjustment portion 15 calculates the number of horizontally arrayed pixels on every horizontal line and the number of vertically arrayed pixels on every vertical line, of the image-missing region 301 present in the first image region. The parameter adjustment portion 15 then determines a number $N_{1A}$ of the horizontal lines on each of which the calculated number of horizontally arrayed pixels is not less than a preset threshold value $TH_A$, and a number $N_{1B}$ of the vertical lines on each of which the calculated number of vertically arrayed pixels is not less than a preset threshold value $TH_B$. The number $N_{1A}$ of the horizontal lines is proportional to the size of a bracket 330 shown in Fig. 13(b).

In a case where the number $N_{1A}$ of the horizontal lines thus determined is one or more, the position of the reference point $P1_B$ is shifted upward (namely, in the vertical direction so as to be shifted away from the center point 310). The amount of the upward shift can be determined in accordance with the number $N_{1A}$ of the horizontal lines. For example, the amount of the upward shift is increased with an increase in the number $N_{1A}$ of the horizontal lines. Similarly, in a case where the number $N_{1B}$ of the vertical lines thus determined is one or more, the position of the reference point $P1_B$ is shifted leftward (namely, in the horizontal direction so as to be shifted away from the center point 310). The amount of the leftward shift can be determined in accordance with the number $N_{1B}$ of the horizontal lines. For example, the amount of the leftward shift is increased with an increase in the number $N_{1B}$ of the horizontal lines. In the example shown in Fig. 13(b), however, $N_{1B} = 0$, and therefore, no leftward shift of the reference point $P1_B$ is performed.

Furthermore, as described earlier, when the position of the reference point $P1_B$ is shifted, the position of the reference point $P2_B$ also is shifted at the same time. In the example shown in Fig. 13(b), since the position of the reference point $P1_B$ is shifted upward, the position of the reference point $P2_B$ also is shifted upward at the same time. The shift amount of the reference point $P1_B$ is the same as the shift amount of the reference point $P2_B$.

Similar processing is performed also with respect to the fourth image region. That is, the parameter adjustment portion 15 calculates the number of horizontally arrayed pixels on every horizontal line and the number of vertically arrayed pixels on every vertical line, of the image-missing region 302 present in the fourth image region. The parameter adjustment portion 15 then determines a number $N_{4A}$ of the horizontal lines on each of which the calculated number of horizontally arrayed pixels is not less than the preset threshold value $TH_A$, and a number $N_{4B}$ of the vertical lines on each of which the calculated number of vertically arrayed pixels is not less than the preset threshold value $TH_B$.

In a case where the number $N_{4A}$ of the horizontal lines thus determined is one or more, the position of the reference point $P4_B$ is shifted downward (namely, in the vertical direction so as to be shifted away from the center point 310). The amount of the downward shift can be determined in accordance with the number $N_{4A}$ of the horizontal lines. For example, the amount of the downward shift is increased with an increase in the number $N_{4A}$ of the horizontal lines. Similarly, in a case where the number $N_{4B}$ of the vertical lines thus determined is one or more, the position of the reference point $P4_B$ is shifted rightward (namely, in the horizontal direction so as to be shifted away from the center point 310). The amount of the rightward shift can be determined in accordance with the number $N_{4B}$ of the horizontal lines. For example, the amount of the rightward shift is increased with an increase in the number $N_{4B}$ of the horizontal lines.

Furthermore, as described earlier, when the position of the reference point $P4_B$ is shifted, the position of the reference point $P3_B$ also is shifted at the same time. In the example shown in Fig. 13(c), since the position of the reference point $P4_B$ is shifted downward to the right, the position of the reference point $P3_B$ also is shifted downward to the left at the same time. The amount of the downward shift of the reference point $P4_B$ is the same as the amount of the downward shift of the reference point $P3_B$, and the amount of the rightward shift of the reference point $P4_B$ is the same as the amount of the leftward shift of the reference point $P3_B$.

Similar processing is performed also with respect to the second and third image regions. In this case, however, the positions of the reference points are shifted so that the positions of the reference point $P1_B$ and the reference point $P2_B$ are always kept in axisymmetric relationship with respect to the vertical center line 242 as a symmetry axis and so that the positions of the reference point $P3_B$ and the reference point $P4_B$ are always kept in axisymmetric relationship with respect to the vertical center line 242 as a symmetry axis.

Thus, in a case where an offset-corrected image as shown in Fig. 14 is obtained in which each of the first and second image regions includes an image-missing region, if it is judged that the position of the reference point $P1_B$ should be shifted upward by five pixels based on the size of the image-missing region present in the first image region and if, at the same time, it is judged that the position of the reference point $P2_B$ should be shifted upward by three pixels based on the size of the image-missing region present in the second image region, the amount of the upward shift of the reference points $P1_B$ and $P2_B$ is determined based on both of these results of the judgments. For example, the positions of the reference points $P1_B$ and $P2_B$ are shifted by a larger one of shift amounts of the reference points $P1_B$ and $P2_B$ that are determined as described above. That is, in a case of the above-described shift amounts, for example, the positions of the reference points $P1_B$ and $P2_B$ are both shifted upward by five pixels.

The positions of the characteristic points $P1_A$ to $P4_A$ in the camera image have been determined in the stage of the processing at step S4 shown in Fig. 4. It also is possible, however, that, in the stage of the processing at step S16, the positions of the characteristic points $P1_A$ to $P4_A$ also are adjusted at the same time. For example, with the aim of removing errors involved in the extraction of the characteristic points $P1_A$ to $P4_A$ based on image data of the camera image, in the stage of the processing at step S16, the user may perform, as required, a manual operation to adjust the positions of the characteristic points $P1_A$ to $P4_A$. In this case, the image transformation parameters are recalculated in accordance with the thus adjusted positions of the characteristic points and the above-described shifted positions of the reference points, and image transformation parameters newly obtained by this recalculation are stored in an updating fashion in the parameter storage portion 16 as adjusted image transformation parameters.

After the image transformation parameters are adjusted at step S16 shown in Fig. 10, a return is made to step S13 where the updatingly stored image transformation parameters are read by the image transformation portion 13, using those updatingly stored image transformation parameters the image transformation processing at step S14 and the loss detection processing at step S15 are carried out. Thus, the processing around the loop from step S13 through step S16 is carried out repeatedly until, at step S15, it is judged that there is no image loss.

If, at step S15, it is judged that there is no image loss, image data of the newest offset-corrected image with no image loss is transmitted from the image transformation portion 13 to the display image generation portion 17 (see Fig. 9). The display image generation portion 17 generates image data of a display image based on the image data of the newest offset-corrected image and outputs the image data of the display image to the display device 3. Thus, the display image based on the offset-corrected image with no image loss is displayed on the display device 3. The display image is, for example, an offset-corrected image as it is, an image obtained by arbitrarily processing an offset-corrected image, or an image obtained by adding an arbitrary image to an offset-corrected image.

According to the driving support system of this embodiment, image transformation parameters are adjusted automatically to be adapted to the installation state of the camera 1, thereby allowing a video image with no image loss to be presented to the driver. Furthermore, when the installation position or the installation angle of the camera 1 with respect to the vehicle 100 is changed, after this change has been made, the processing at steps S11 through S17 shown in Fig. 10 is carried out via performing the processing at steps S1 through S6 shown in Fig. 4, and thus image transformation parameters are adjusted automatically to be adapted to the thus changed installation state of the camera 1. That is, even when the installation position or the installation angle of the camera 1 is changed, image transformation parameters appropriate for the generation of a video image with no image loss can be generated easily. Moreover, according to the driving support system of this embodiment, unlike a case of using the method described in Patent Document 1, on a display screen, an image is allowed to appear on a uniform scale across the left and right sides of the image.

«Modifications and Variations»

Modified examples of, or additional comments on, the embodiment described above will be given below in notes 1 to 7. Unless inconsistent, any part of these notes may be freely combined with any other part.

[Note 1]

Although in the above-described example, the number of the characteristic points and the number of the reference points used to determine a homography matrix as image transformation parameters are four, respectively, the numbers are arbitrary as long as they are not smaller than four. As generally known, increasing the numbers to larger than four allows image transformation to be performed with increased accuracy.

[Note 2]

The method of image transformation (method of coordinate transformation) for generating an offset-corrected image from a camera image is not limited to the method based on a homography matrix. For example, an offset-corrected image may be generated from a camera image by image transformation (coordinate transformation) using an affine transform or nonlinear transformation.

[Note 3]

In the context of the description of the embodiment described above, the terms "horizontal" and "vertical" may be used interchangeably. That is, although in the above-described example, the travel direction of the vehicle is assumed to correspond to the vertical direction of an image, the travel direction of the vehicle also may be assumed to correspond to the horizontal direction of an image.

[Note 4]

Although in the above-described example, an image that has undergone lens distortion correction is acted upon by image transformation parameters, it also is possible that image transformation for lens distortion correction is incorporated in image transformation parameters used in the image transformation portion 13 so that an offset-corrected image is generated at a stroke (directly) from an original image. In this case, an original image acquired by the image input portion 11 shown in Fig. 9 is inputted to the image transformation portion 13. The image transformation parameters in which image transformation for lens distortion correction is incorporated are stored beforehand in the parameter storage portion 16; thus, an original image is acted upon by those image transformation parameters, and thereby an offset-corrected image is generated.

Depending on the camera used, lens distortion correction itself may be unnecessary. In a case where lens distortion correction is unnecessary, the lens distortion correction portion 12 is omitted from the image processing device 2 shown in Fig. 9 and an original image is fed directly to the image transformation portion 13.

[Note 5]

Although in the above-described example, the camera 1 is installed in a rear part of the vehicle 100 so that the camera 1 has a viewing field in the rear direction of the vehicle 100, it also is possible that the camera 1 is installed in a front or side part of the vehicle 100 so that the camera 1 has a viewing field in the front or side direction of the vehicle 100.

[Note 6]

Although in the above-described example, a display image based on a camera image obtained from a single camera is displayed on the display device 3, it also is possible that a plurality of cameras (not shown) are installed on the vehicle 100, and a display image is generated based on a plurality of camera images obtained from those cameras (not shown). In one possible example, in addition to the camera 1, one or more other cameras are installed on the vehicle 100; an image based on camera images from those other cameras is merged with an image (in the above-described example, an offset-corrected image) based on a camera image of the camera 1, and a resulting merged image is eventually taken as a display image to be fed to the display device 3. The merged image described herein is, for example, an image with a viewing field covering 360 degrees around the vehicle 100.

[Note 7]

The image processing device 2 shown in Fig. 9 can be realized in hardware, or in a combination of hardware and software. In a case where the image processing device 2 is configured on a software basis, a block diagram showing a part realized in software serves as a functional block diagram of that part. All or part of the functions performed by the image processing device 2 may be prepared in the form of a software program so that, when the software program is run on a program executing device, all or part of those functions are performed.

**Claims**

1.  An image processing device comprising:

    an image acquisition portion which acquires an input image based on a result of shooting by a camera shooting surroundings of a vehicle;
    an image transformation portion which generates a transformed image from the input image by coordinate transformation such that a position of a characteristic point on the input image is transformed into a position of a reference point on the transformed image;
    a parameter storage portion which stores an image transformation parameter that is based on the position of the characteristic point and the position of the reference point and used for transforming the input image into the transformed image;
    a loss detection portion which checks, by use of the image transformation parameter stored in the parameter storage portion, whether or not, within an entire region of the transformed image obtained from the input image, an image-missing region is present where no image data based on image data of the input image is available; and
    a parameter adjustment portion which, if the image-missing region is judged to be present within the entire region of the transformed image, adjusts the image transformation parameter via changing the position of the reference point so as to suppress presence of the image-missing region.

**2.** The image processing device according to claim 1, wherein, if the image-missing region is judged to be present within the entire region of the transformed image, the parameter adjustment portion adjusts the image transformation parameter by shifting the position of the reference point in a direction in which the position is shifted away from a center position of the transformed image so as to reduce a size of the image-missing region.

**3.** The image processing device according to claim 2, wherein
the characteristic point comprises a plurality of characteristic points including first and second characteristic points, and the reference point comprises a plurality of reference points including first and second reference points, the first and second characteristic points corresponding to the first and second reference points, respectively,
if it is judged that the image-missing region is present in a region, which is closer to the first reference point than to the second reference point, within the entire region of the transformed image, the parameter adjustment portion shifts a position of the first reference point in a direction in which the position of the first reference point is shifted away from the center position so as to reduce the size of the image-missing region, and
if it is judged that the image-missing region is present in a region, which is closer to the second reference point than to the first reference point, within the entire region of the transformed image, the parameter adjustment portion shifts a position of the second reference point within the transformed image in a direction in which the position of the second reference point is shifted away from the center position so as to reduce the size of the image-missing region.

**4.** The image processing device according to claim 3, wherein
supposing that the transformed image is divided into first and second partial images by a center line bisecting the transformed image in a horizontal or vertical direction, the first and second reference points are positioned within the first and second partial images, respectively, and
when shifting the position of one of the first and second reference points, the parameter adjustment portion shifts the position of the other as well at the same time so that the positions of the first and second reference points are kept in axisymmetric relationship with respect to the center line as a symmetry axis.

**5.** The image processing device according to claim 4, wherein the position of the characteristic point, the position of the reference point before being shifted, and a shifted position of the reference point are determined so that, on the transformed image, a vehicle body center line of the vehicle in a travel direction of the vehicle coincides with the center line.

**6.** The image processing device according to any one of claims 1 to 5, wherein
the image transformation parameter defines coordinates before coordinate transformation corresponding to coordinates of individual pixels within the transformed image, and
when the coordinates before coordinate transformation are all coordinates within the input image, the loss detection portion judges that no image-missing region is present within the entire region of the transformed image and, when the coordinates before coordinate transformation include coordinates outside the input image, the loss detection portion judges that the image-missing region is present within the entire region of the transformed image.

**7.** A driving support system comprising the camera and the image processing device according to any one of claims 1 to 5, wherein an image based on the transformed image obtained at the image transformation portion of the image processing device is outputted to a display device.

**8.** A vehicle comprising the camera and the image processing device according to any one of claims 1 to 5.

**9.** An image processing method comprising:

an image acquiring step of acquiring an input image based on a result of shooting by a camera shooting surroundings of a vehicle;
an image transforming step of generating a transformed image from the input image by coordinate transformation such that a position of a characteristic point on the input image is transformed into a position of a reference point on the transformed image;
a parameter storing step of storing an image transformation parameter that is based on the position of the characteristic point and the position of the reference point and used for transforming the input image into the transformed image;
a loss detecting step of checking, by use of the image transformation parameter stored, whether or not, within an entire region of the transformed image obtained from the input image, an image-missing region is present where no image data based on image data of the input image is available; and

a parameter adjusting step of adjusting, if the image-missing region is judged to be present within the entire region of the transformed image, the image transformation parameter via changing the position of the reference point so as to suppress presence of the image-missing region.

# FIG.1

(a)

FRONT
DIRECTION
OF VEHICLE

(b)

# FIG.2

CAMERA → IMAGE PROCESSING DEVICE → DISPLAY DEVICE

OPERATION PORTION

# FIG.3

(a)                    (b)

# FIG.4

STRAT

S1 — SET UP CALIBRATION ENVIRONMENT

S2 — ACQUIRE ORIGINAL IMAGE

S3 — CORRECT LENS DISTORTION

S4 — DETERMINE COORDINATES OF FOUR CHARACTERISTIC POINTS ON CAMERA IMAGE

S5 — DETERMINE COORDINATES OF FOUR REFERENCE POINTS ON OFFSET-CORRECTED IMAGE

S6 — CALCULATE INITIAL VALUE OF HOMOGRAPHY MATRIX BASED ON COORDINATE INFORMATION ON FOUR SETS OF COORDINATES

END

# FIG.5

P1

L1

P3

P2

L2

P4

1

Y$_C$

100

# FIG.6

CAMERA IMAGE 210

P1$_A$ P2$_A$

P3$_A$ P4$_A$

COORDINATE
TRANSFORMATION

OFFSET-CORRECTED 220
IMAGE

P1$_B$ P2$_B$

P3$_B$ P4$_B$

EP 2 256 686 A1

# FIG.7

Y

242 ; VERTICAL
CENTER LINE

230

| FIRST IMAGE REGION (FIRST PARTIAL IMAGE) | SECOND IMAGE REGION (SECOND PARTIAL IMAGE) |
|---|---|
| THIRD IMAGE REGION (THIRD PARTIAL IMAGE) | FOURTH IMAGE REGION (FOURTH PARTIAL IMAGE) |

241 ; HORIZONTAL
CENTER LINE

O → X

240

# FIG.8

OFFSET-CORRECTED IMAGE

251

252

# FIG.9

# FIG.10

```
        ┌─────────┐
        │  STRAT  │
        └─────────┘
             │
             ▼
      ┌──────────────────┐
 S11  │ ACQUIRE ORIGINAL │
      │      IMAGE       │
      └──────────────────┘
             │
             ▼
      ┌──────────────────┐
 S12  │  CORRECT LENS    │
      │   DISTORTION     │
      └──────────────────┘
             │
             ▼
      ┌──────────────────┐
      │   READ IMAGE     │
 S13  │ TRANSFORMATION   │◄─────────────────────┐
      │   PARAMETERS     │                      │
      └──────────────────┘                      │
             │                                  │
             ▼                                  │
      ┌──────────────────┐                      │
 S14  │ PERFORM IMAGE    │                      │
      │ TRANSFORMATION   │    S16               │
      └──────────────────┘                      │
             │              ┌───────────────────────────────┐
             ▼              │      ADJUST IMAGE             │
          ╱──────╲          │    TRANSFORMATION            │
         ╱   IS   ╲    Y    │ PARAMETERS BY ADJUSTING      │
 S15    ╱ THERE    ╲───────►│ POSITIONS OF REFERENCE       │
        ╲  IMAGE   ╱        │       POINTS                 │
         ╲ LOSS?  ╱         └───────────────────────────────┘
          ╲──────╱
             │ N
             ▼
      ┌──────────────────┐
 S17  │    DISPLAY       │
      └──────────────────┘
             │
             ▼
        ┌─────────┐
        │   END   │
        └─────────┘
```

# FIG.11

# FIG.12

(a) COORDINATE TRANSFORMATION — 280, 270

(b) COORDINATE TRANSFORMATION — MISSING PIXEL, 280, 270

EP 2 256 686 A1

# FIG.13

OFFSET-CORRECTED IMAGE

300

301

$P1_B$  $P2_B$

310

302

$P3_B$  $P4_B$

(a)

330 301

FIRST IMAGE REGION

VERTICAL DIRECTION

$TH_B$

$P1_B$

$TH_A$

310

HORIZONTAL DIRECTION

(b)

310

FOURTH IMAGE REGION

VERTICAL DIRECTION

302

$P4_B$

$TH_B$

$TH_A$

HORIZONTAL DIRECTION

(c)

# FIG.14

OFFSET-CORRECTED IMAGE

$P1_B$

$P2_B$

$P3_B$

$P4_B$

# FIG.15

901

TRAVEL DIRECTION

| | | |
|---|---|---|
| **INTERNATIONAL SEARCH REPORT** | | International application No. |
| | | PCT/JP2009/051748 |

A. CLASSIFICATION OF SUBJECT MATTER
*G06T1/00*(2006.01)i, *B60R1/00*(2006.01)i, *G06T3/00*(2006.01)i, *H04N7/18* (2006.01)i

According to International Patent Classification (IPC) or to both national classification and IPC

B. FIELDS SEARCHED

Minimum documentation searched (classification system followed by classification symbols)
G06T1/00, B60R1/00, G06T3/00, H04N7/18

Documentation searched other than minimum documentation to the extent that such documents are included in the fields searched
Jitsuyo Shinan Koho          1922-1996   Jitsuyo Shinan Toroku Koho   1996-2009
Kokai Jitsuyo Shinan Koho    1971-2009   Toroku Jitsuyo Shinan Koho   1994-2009

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2006-252473 A  (Toshiba Corp.), 21 September, 2006 (21.09.06), Full text; all drawings & US 2006/0227041 A1 | 1-9 |
| A | JP 2007-89111 A  (Kazuro IWANE), 05 April, 2007 (05.04.07), Full text; all drawings (Family: none) | 1-9 |

☐ Further documents are listed in the continuation of Box C.   ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| | |
|---|---|
| Date of the actual completion of the international search | Date of mailing of the international search report |
| 23 March, 2009 (23.03.09) | 31 March, 2009 (31.03.09) |
| Name and mailing address of the ISA/ | Authorized officer |
| Japanese Patent Office | |
| Facsimile No. | Telephone No. |

Form PCT/ISA/210 (second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005129988 A
- JP S63142478 A
- JP H778234 A
- WO 007373 A
- JP 2004342067 A
- JP H5176323 A